# EUROPEAN PATENT APPLICATION

(11) **EP 4 005 761 A1**
(43) Date of publication of application: **01.06.2022**
(21) Application number: 20842993.6
(22) Date of filing: 07.09.2020
(51) Int. Cl.: B28B 23/04, B28B 7/16, C04B 22/06, E04B 5/02, E04C 2/04, E04C 2/06, E04C 5/07, E04C 5/08, E04C 5/20

(54) **PRESTRESSED CONCRETE**

(30) Priority: 22.07.2019 JP 2019134758; 02.03.2020 JP 2020034583; 13.07.2020 JP 2020119702
(71) Applicant: HPC Okinawa Co., Ltd., Okinawa 901-1207 (JP)
(72) Inventor: AHAGON Masaki, Okinawa-shi Okinawa 904-2165 (JP); NISHIZONO Hiromi, Yokohama-shi Kanagawa 225-0013 (JP); TADA Shuji, Tokyo 154-0023 (JP); HOSOYA Jin, Tokyo 154-0011 (JP); FUKAZAWA Hiroki, Tokyo 167-0033 (JP); ARIGA Shunji, Naha-shi Okinawa 903-0804 (JP)
(74) Representative: Hoffmann Eitle
(86) International application number: PCT/JP2020/033724
(87) International publication number: WO 2021/015299

(57) **Abstract**

An object is to provide a prestressed concrete that can be widely used for general building members, in which a chemical stress induced by an expansive material and a mechanical stress induced by a continuous fiber reinforcing wire are simultaneously used together, and due to a synergistic effect of the mechanical stress and the chemical stress, the strength is increased, the reduction in weight, reduction in thickness, and suppression of cracking are achieved, and the degree of freedom in design is increased. To provide a prestressed concrete characterized in that, in a concrete into which a prestress is introduced, a mechanical stress induced by a tensional material and a chemical stress induced by an expansive material for a concrete are introduced simultaneously into the concrete, the tensional material is a continuous fiber reinforcing wire, the expansive material for a concrete is contained in an amount of 5 to 30 kg /m3, and aluminum oxide is contained in an amount of 0.2 to 2.0% by weight to the expansive material.

## Description

### Technical Field

The present invention relates to a prestressed concrete in which a chemical stress induced by a concrete expansive material and a mechanical stress using a continuous fiber reinforcing wire are introduced together.

### Background Art

Conventionally, a concrete obtained by introducing a prestress into a cement-based material having an excellent mechanical characteristic (compressive strength, flexural strength, or the like) has been developed.

In a conventional prestressed concrete, in a case of a pretension method, using a high-tensile steel material (PC steel material) as a tensional material to introduce a prestress, a concrete is poured while a PC steel wire or a PC steel strand wire obtained by twisting two or three wires is tensioned by a long line method or a form fixing method, and these PC steel wires are cut after curing and hardening to manufacture a prestressed concrete.

In recent years, a prestressed tensional material using a rod of a fiber material reinforced in one direction with a glass fiber, a carbon fiber, an aramid fiber, or the like having a high strength has been used, and has attracted attention as a prestressed concrete having excellent corrosion resistance.

JP 2004-155623 A discloses a technique for expressing the high tensile strength or high shear strength of a prestressed concrete.

JP 2002-326285 A discloses a technique for a prestressed concrete tensional material using a continuous fiber reinforced plastic composite material.

Usually, drying of a concrete structure starts on the surface of the concrete, it shrinks. Therefore, when the shrinkage stress is higher than the tensile strength of the concrete, a crack is generated.

In order to reduce such a crack, it is necessary to give the expansion amount sufficient to compensate the drying shrinkage amount of a concrete or to reduce the drying shrinkage amount by blending a predetermined concrete admixture to the concrete. As the concrete admixture therefor, an expansive material or a shrinkage reducing agent is known.

Among these materials, the expansive material contains a material expanding in accordance with hydration reaction, and prevents drying shrinkage of a concrete structure due to hydration expansion.

JP 2005-162564 A discloses an expansive material of a concrete. This makes inexpensive quick lime sufficiently usable as an expansive material for a mortar or a concrete, for example, without subjecting the quick lime to a complicated treatment such as a treatment for manufacturing a clinker burning material by adding another raw material component as in prior art, and almost without causing an increase in cost. This provides an expansive material capable of granting such a stable expansion force to be able to compete sufficiently with contraction of a mortar or a concrete or an external pressure, in particular, an expansive material capable of introducing a chemical prestress without using a large amount of the expansive material, and a concrete capable of introducing a chemical prestress.

As described above, a prestressed concrete has been developed in order to overcome the largest problem of a concrete that the concrete is resistant to compression but is not resistant to tension. The prestressed concrete is maintained in a state that a compressive force is applied (prestressed) to a concrete member before a load is applied, prevents generation of a tensile stress in the concrete when the concrete receives the load, or controls the tensile stress. The prestressed concrete can prevent cracking due to a tensile stress compared to a reinforced concrete.

### Citation List

### Patent Literature

Patent Literature 1: JP 2004-155623 A
Patent Literature 1: JP 2002-326285 A
Patent Literature 2: JP 2005-162564 A

### Summary of Invention

### Technical Problem

As described in the above conventional patent publications, a prestressed concrete has been developed variously in order to increase the strength thereof.

As the application, a conventional prestressed concrete is often used for a bridge, an electric pole, a concrete pile, a construction member, a beam of a building, or the like, and is mainly used for a structural material.

A prestressed concrete is an effective technique capable of suppressing the cracking on a surface, which may be a fate of a concrete.

However, as described above, the prestressed concrete is used for structural materials, but is hardly used for non-structural materials such as general construction members.

This is because a conventional image for a concrete, such as a large weight, difficulty in reducing a concrete thickness, or cracking, is a major obstacle in applying the concrete to a non-structural material as a general construction member requiring a light weight, a notched shape, and a design property.

The present invention has been achieved in view of the above problems. An object thereof is to provide a prestressed concrete that can be widely used for general building members, in which a chemical stress induced by an expansive material and a mechanical stress induced by a continuous fiber reinforcing wire are used together, and due to a synergistic effect of the mechanical stress and the chemical stress, the strength is increased, the reduction in weight, reduction in thickness, and suppression of cracking are achieved, and the degree of freedom in design is increased.

### Solution to Problem

In order to solve various problems, claim 1 of the present invention provides a prestressed concrete being a concrete into which a prestress is introduced,
characterized in that a mechanical stress induced by a tensional material and a chemical stress induced by an expansive material for a concrete are introduced simultaneously into the concrete, the tensional material is a continuous fiber reinforcing wire, the expansive material for a concrete is contained in an amount of 5 to 30 kg /m3 to the concrete material, and aluminum oxide is contained in an amount of 0.2 to 2.0% by weight to the expansive material for a concrete.

The mechanical stress induced by a tensional material may be any stress as long as a mechanical tensile stress can be introduced into a concrete in advance by using various kinds of continuous fiber reinforcing wires as a tensional material. A prestress may be introduced by a pretension method or a posttension method.

For the chemical stress induced by the expansive material for a concrete, any expansive material that is used for a concrete may be used, and such an expansive material is contained preferably in an amount of 5 to 30 kg /m3 to the concrete material. Such an expansive material is contained more preferably in an amount of 10 to 25 kg /m3, and furthermore preferably in an amount of 15 to 25 kg /m3. In a case where the expansive material is in an amount of 30 kg or more, the strength may be largely reduced, and therefore such a case is not preferable.

Further, the content of aluminum oxide in the expansive material for a concrete only needs to be 0.2 to 2.0% by weight. The content is preferably 0.3 to 1.9% by weight, and more preferably 0.5 to 1.8% by weight. When the aluminum oxide content is 0.2% by weight or less, the expansion effect is weak, and a synergistic effect of a chemical stress cannot be expected. Furthermore, in a case where the aluminum oxide content is 2.0% by weight or more, the content largely influences the quick hardening of a concrete, and the concrete hardens before exhibiting sufficient strength, and therefore, such a case is not preferable.

In the present invention, by simultaneously introducing a mechanical stress and a chemical stress, a synergistic effect due to both stresses is effectively exerted.

The mechanical stress is a shrinkage stress due to a tensional material to which a tensile load is applied, and the chemical stress is an expansion stress of a concrete due to an expansive material. These shrinkage stress due to a tensional material and the expansion stress of a concrete, show a synergistic effect, increase the overall bending stress, and achieve a concrete having toughness like a metal.

In this regard, in order to effectively show the above synergistic effect, the adhesion force between the tensional material and the concrete is important. If the adhesion force is weak, the synergistic effect cannot be sufficiently shown.

When the concrete is expanded by an expansive material, due to the expansion in a state that the adhesion force between the tensional material and the concrete is strong, the synergistic effect is increased, but if the adhesion force is weak, the shrinkage stress of the tensional material under a tensile load does not act on the concrete, and such a synergistic effect cannot be expected.

In the expansion action of the expansive material, crystals of the expansive material densely enter voids of a concrete and expand the concrete. By the expansion action, the concrete expands and hardens while firmly tightening the surroundings of the tensional material, and therefore, the stress of the tensional material is effectively transmitted to the concrete, and the overall bending stress can be increased.

As a cement containing aluminum oxide in a large amount, alumina cement is known. This alumina cement is mainly made of calcium aluminate and has quick hardening, of which the fire resistance and chemical resistance are excellent, but the long-term strength becomes unstable due to the conversion of hydrates. The alumina cement is used for emergency works, a water blocking material, a refractory, or the like.

In the present invention, when an alumina cement is used, the alumina cement rapidly hardens due to the quick hardening before the expansion by an expansive material, the expansion and hardening are completed while the adhesion force between the tensional material and the concrete is weak, and therefore, the synergistic effect cannot be expected. The alumina cement is effective for emergency works which require quick hardening, a water blocking material, or a refractory, but is not suitable for a prestressed concrete that requires sufficient strength.

An expansive material that can achieve an appropriate hardening rate and a high adhesion force between the tensional material and the concrete is required, and an appropriate content of aluminum oxide is important.

The prestressed concrete according to the present invention is effective, for example, as a concrete member used for a structural portion requiring high strength such as a bridge, an electric pole, a concrete pile, a construction member, or a beam of a building; or as a general building member such as a construction member used for members other than primary structural members, a flooring material, a ceiling material, a wall material, a finishing member, a design member, a furniture material, a partition wall member, a cosmetic member, a fitting member, or a mounting member. In addition, the prestressed concrete can be used as an alternate member for a metal member, a glass member, a hard resin member, a wood member, an impact energy absorbing member such as a damping member or a vibration isolation member, or the like. The shape of the concrete is not limited. Examples thereof include a plate shape, a character object shape, a hollow shape, and a three-dimensional shape.

Claim 2 provides a prestressed concrete, characterized in that the continuous fiber reinforcing wire is a reinforcing fiber wire of one or more kinds of fibers selected from an aramid fiber, a carbon fiber, a glass fiber, a poly-p-phenylenebenzobisoxazole fiber, a stone material fiber such as a basalt fiber, and a rust prevention-treated PC steel strand wire.

The continuous fiber reinforcing wire is a linear continuous fiber reinforcing material, and is a PC tensional material using a reinforced fiber reinforcing material continuously molded in a linear shape. The continuous fiber reinforcing material is a generic name of a material obtained by binding a carbon fiber, a glass fiber, an aramid fiber, a vinylon fiber, or the like with an epoxy resin or the like.

The reinforced fiber reinforcing material has better physical properties (tensile strength, elastic modulus) such as light weight, high strength, high elasticity, corrosion resistance, a non-conductive property, or a nonmagnetic property than reinforcement, and excellent corrosion resistance and electromagnetic characteristics which reinforcement does not have.

The linear shape generally means a linear shape or a two-dimensionally or three-dimensionally assembled shape of the linear shape units, such as a round shape, a rectangular shape, an irregular-shaped (rib or indented surface) rod, a braid-shaped rod, a twisted wire-shaped strand, or a lattice shape.

Claim 3 provides a prestressed concrete, characterized in that the expansive material for a concrete is a mixture of one or more kinds selected from a lime-based expansive material such as quick lime, an ettringite-based expansive material such as calcium sulfoaluminate, an ettringite-lime composite-based expansive material, an iron powder-based expansive material, a magnesium-based expansive material, an aluminum powder-based expansive material, a shale-based expansive material, and a silica-based expansive material.

The expansive material may have an aluminum oxide content of 0.2 to 2.0% by weight, and the combination thereof is not limited.

Claim 4 provides a prestressed concrete, characterized in that the wire of the tensional material has a wire diameter of 18 mm or less.

The wire diameter may be any value as long as it is 18.0 mm or less. The wire diameter only needs to be able to ensure the tensile strength with which a mechanical prestress can be introduced.

The wire diameter is preferably from 5.0 mm to 13.5 mm, and more preferably from 5.0 mm to 10.0 mm.

In case of the wire diameter of 18.0 mm or more, a covering thickness of a concrete is increased, and the degree of freedom in design is limited. Therefore, the wire diameter of 18.0 mm or more is not preferable from the viewpoint of a design property.

Claim 5 provides a prestressed concrete, characterized in that the tensional material has a tensile load of 300 kN or less per the wire.

The tensile load may be any value as long as it is 300 kN or less. The tensile load only needs to be able to ensure a tensile load with which the cracking on a surface of a concrete can be effectively suppressed and the bending resistance can be enhanced after a prestress is introduced.

The tensile load is preferably from 5 kN to 200 kN, more preferably from 10 kN to 150 kN, and furthermore preferably about from 15 kN to 80 kN.

The tensile load can be adjusted arbitrarily according to a plate thickness of a prestressed concrete. When the thickness of a prestressed concrete is 40 mm or less, the tensile load may be 50 kN or less.

Claim 6 provides a prestressed concrete, characterized in that the concrete has a thickness of 80 mm or less.

The concrete thickness may be any value as long as it is 80 mm or less. The concrete thickness only needs to be able to ensure a minimum covering thickness with the use of a continuous fiber reinforcing wire as a tensional material.

The concrete thickness is preferably 50 mm or less, and more preferably 40 mm or less. In a continuous fiber reinforcing material, explosion to be caused by rust or the like does not occur because of the rust resistance, and therefore, the covering thickness can be suppressed to 10 mm or less.

Claim 7 provides a prestressed concrete, characterized in that a discontinuous fiber reinforcing material is used.

The discontinuous fiber reinforcing material may be any material as long as it is a fiber reinforcing material in a discontinuous state.

As the size of a fiber, a diameter of 0.005 to 1.5 mm and a length of 5 to 50 mm are applicable from the viewpoints of preventing the material separation of fibers in a formulation and improving the bending strength or toughness after hardening. Further, as the size of a fiber, a diameter of 0.1 to 1.0 mm and a length of 5 to 30 mm are preferable. An aspect ratio of a carbon fiber (fiber length/fiber diameter) is preferably from 10 to 200, more preferably from 20 to 150, and furthermore preferably from 30 to 100.

The blending amount thereof is properly from 0.2 to 5.0%, of concrete preferably from 0.3 to 3.0%, and more preferably from 0.5 to 2.0% in terms of volume percent in a formulation. With the blending amount of less than 0.2%, the effect of improving the flexural strength or toughness of a structural member is low, and therefore, such a blending amount is not preferable. On the other hand, if the blending amount exceeds 5.0%, a unit amount of water is increased in order to ensure the flowability or the like, and further an effect for reinforcing a fiber is not enhanced even with the increase of the blending amount, and therefore, such a blending amount is not economical. In addition, with the blending amount exceeding 5.0%, a so-called fiber ball easily generates in a kneaded product, and therefore, such a blending amount is not preferable.

Claim 8 provides a prestressed concrete, characterized in that the discontinuous fiber reinforcing material is a reinforcing fiber material formed of one or more kinds of fibers selected from a carbon fiber, a glass fiber, a resin fiber, and a stone material fiber such as a basalt fiber.

Claim 9 provides a prestressed concrete, characterized in that a pigment is mixed.

The pigment may be any pigment as long as it is blended in a concrete raw material and coloring a concrete.

The pigment can be appropriately selected from conventional pigments according to a desired color, and can be blended. Specific examples thereof include a powdery inorganic pigment such as red iron oxide, titanium white, chrome yellow, ultramarine blue, cobalt blue, or cobalt purple.

Examples thereof further include titanium dioxide, zinc sulfide, zinc oxide, iron oxide, magnetite, magnesium iron oxide, chromium oxide, ultramarine blue, cobalt oxide, nickel or chromium-antimony-titanium oxide, manganese-titanium-rutile, cobalt oxide, a mixed oxide of cobalt and aluminum, a rutile mixed-phase pigment, a sulfide of rare earth, spinel of cobalt, nickel, and zinc, spinel of copper, zinc, and manganese based on iron and chromium, a bismuth-vanadium salt, and a blend pigment. Particularly, examples of a color index pigment include pigment yellow 184, pigment yellow 53, pigment yellow 42, pigment yellow brown 24, pigment red 101, pigment blue 28, pigment blue 36, pigment green 50, pigment green 17, pigment black 11, pigment black 33, and pigment white 6. A mixture of these inorganic pigments may be used.

Examples of an organic pigment include a monoazo pigment, a disazo pigment, a laked azo pigment, a β-naphthol pigment, a naphthol AS pigment, a benzimidazolone pigment, a disazo condensation pigment, an azo metal complex pigment, a polycyclic pigment such as a phthalocyanine pigment, a quinacridone pigment, a perylene pigment, a perinone pigment, a thioindigo pigment, an anthanthrone pigment, an anthraquinone pigment, a flavanthrone pigment, an indathrone pigment, an isobioranthrone pigment, a pyranthrone pigment, a dioxazine pigment, a quinophthalone pigment, an isoindolinone pigment, an isoindoline pigment, or a diketopyrrolopyrrole pigment, and carbon black. A mixture of these organic pigments may be used. These organic pigments and inorganic pigments may be used in combination of two or more kinds thereof.

A pigment is powdery, and the addition amount of the pigment is small. Therefore, even when the pigment is added directly to a concrete kneaded product and is stirred, the pigment is not dispersed uniformly in many cases.

For this reason, a pigment is preferably prepared in a form of slurry by using a water reducing agent and water.

The water reducing agent is used in order to prevent aggregation of a pigment in water, to improve the dispersion thereof, and to make the dispersion of the pigment in a concrete kneaded product easier.

The absolute amount of the water reducing agent contained in the slurry is small. Therefore, the water reducing agent hardly influences a characteristic such as strength of a colored concrete.

Examples of the water reducing agent used for slurry include lignin-based, naphthalene sulfonic acid-based, melamine-based, and polycarboxylic acid-based water reducing agents for a cement, an AE water reducing agent, a high-performance water reducing agent, and a high-performance AE water reducing agent, which are general water reducing agents. It is only necessary to use a water reducing agent selected from these examples, and two or more kinds thereof can be used together.

As the water reducing agent used for slurry, the same agent as that blended in the concrete kneaded product is preferably used because of being stirred with the concrete kneaded product rapidly.

Viscosity of slurry is determined appropriately considering the pigment fineness, the kind and amount of the water reducing agent, the amount of water, and the like.

Claim 10 provides a prestressed concrete, characterized in that any irregularities are formed on a surface the prestressed concrete using a soft form.

The soft form may be any form as long as it is a soft form using a soft material such as a resin or a rubber and can form any irregularities on a surface of a concrete.

Examples of the resin that is a soft material include a thermoplastic resin and a thermosetting resin. Examples of the thermoplastic resin include polypropylene, polycarbonate, PET, and PBT, which are obtained by kneading a short fiber. Examples of the thermosetting resin include an epoxy resin, a vinyl ester resin, an unsaturated polyester resin, and a resin obtained by combining these resins appropriately.

Examples of a fiber reinforced material include a glass fiber, a carbon fiber, an aramid fiber, and a stone material fiber such as a basalt fiber, which are usually used for a fiber reinforced plastic.

A foamed resin form formed of a foamed body of a resin such as polyethylene, polypropylene, polystyrene, or polyurethane may be used.

Examples of the rubber that is a soft material include a natural rubber and a synthetic rubber. Examples of the synthetic rubber include a silicone rubber, a urethane rubber, a fluorocarbon rubber, an isoprene rubber, an ethylene propylene rubber, a styrene butadiene rubber, and a chloroprene rubber.

The soft form may be any form as long as it is a plate-shaped elastic form in which any irregularities have been formed such that irregularities appear on a surface of a concrete after the soft form is peeled. Examples thereof include a form obtained by solidifying and molding a resin material or a rubber material such that any shape appears on a surface, a form obtained by subjecting a surface of a plate body of a resin material or a rubber material to laser processing, and a form obtained by molding a resin material or a rubber material using a 3D printer.

Any irregular shape may be any shape as long as it is designed so as to enhance a design property. Examples thereof include a cast stone pattern, a grain pattern, a geometric pattern, a perforated panel, and an expression of a shape such as a letter, a photograph, or a character authorized by copyright.

### Advantageous Effects of Invention

The present invention exhibits the following effects.
1) By simultaneously introducing a mechanical stress induced by a continuous fiber reinforcing wire and a chemical stress induced by an expansive material for a concrete and using an expansive material having an adequate aluminum oxide content, an effective synergistic effect of the mechanical stress and the chemical stress is shown, the strength is increased, the reduction in weight and suppression of cracking are achieved, the degree of freedom in design is increased, and a prestressed concrete capable of being used as a general building member can be achieved.
2) By using a continuous fiber reinforcing wire, a problem of explosion to be caused by rust can be solved, a covering thickness can be minimized, a concrete thickness can be reduced, and application of a concrete as a general building material can be widened largely.
3) By using a concrete expansive material together, a portion hardly influenced by a mechanical prestress can be compensated by a chemical stress.
4) A concrete thickness can be reduced, a notched shape can be provided, and the degree of freedom in design is widened largely.
5) Due to a synergistic effect of a mechanical stress and a chemical stress, the strength can be increased even when a surface shape is changed, or a notched part or an opening part is provided. Therefore, a drastic design configuration can be made, and a more flexible prestressed concrete plate can be achieved.
6) By reducing a thickness and a weight and suppressing cracking, a prestressed concrete according to the present invention is applicable to a member for which a conventional concrete has not been used.
7) A prestressed concrete according to the present invention can be used as an alternate member for a metal member, a glass member, a hard resin member, a wood member, an impact energy absorbing member such as a damping member or a vibration isolation member, a form material as a preceding framework, or the like.
8) A prestressed concrete having any color can be provided.
9) A prestressed concrete having any irregular shape expressed on the surface thereof and having a higher design property can be achieved.

### Brief Description of Drawings

Fig. 1 is an explanatory view of a conventional pretension bed (manufacturing apparatus).
Fig. 2 is a schematic view illustrating arrangement of a tensional material in the prestressed concrete according to the present invention.
Fig. 3 is a schematic view of a bending test body in the prestressed concrete according to the present invention.
Fig. 4 is a schematic diagram illustrating a bending test situation of the prestressed concrete test body according to the present invention.
Fig. 5 is a diagram illustrating a load position of the prestressed concrete test body according to the present invention.
Fig. 6 is a diagram illustrating a bending test result of three prestressed concrete test bodies with holes according to the present invention.
Fig. 7 is a diagram illustrating a bending test result of three prestressed concrete test bodies without holes according to the present invention.
Fig. 8-1 is a diagram illustrating situations in CASE-1 at the time of cracking and at the time of unloading in a bending test of the prestressed concrete test body according to the present invention.
Fig. 8-2 is a diagram illustrating situations in CASE-2 at the time of cracking and at the time of unloading in a bending test of the prestressed concrete test body according to the present invention.
Fig. 8-3 is a diagram illustrating situations in CASE-3 at the time of cracking and at the time of unloading in a bending test of the prestressed concrete test body according to the present invention.
Fig. 8-4 is a diagram illustrating situations in CASE-4 at the time of cracking and at the time of unloading in a bending test of the prestressed concrete test body according to the present invention.
Fig. 8-5 is a diagram illustrating situations in CASE-5 at the time of cracking and at the time of unloading in a bending test of the prestressed concrete test body according to the present invention.
Fig. 8-6 is a diagram illustrating situations in CASE-6 at the time of cracking and at the time of unloading in a bending test of the prestressed concrete test body according to the present invention.
Fig. 9-1 is a diagram illustrating a bending test result of the prestressed concrete test body (expansive material of the present invention) according to the present invention.
Fig. 9-2 is a diagram illustrating a bending test result of the prestressed concrete test body (commercially available expansive material: expansive material manufactured by Buddy Rhodes) according to the present invention.

### Description of Embodiments

Embodiments of the present invention will be described with reference to the drawings.

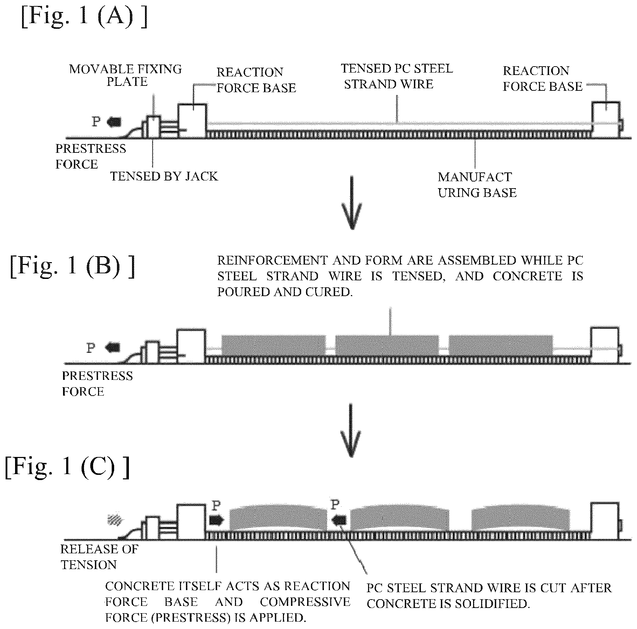

First, Fig. 1 illustrates a method for introducing a mechanical prestress by a conventional pretension method.

Fig. 1 is an explanatory view of a pretension bed (manufacturing apparatus).

This illustrates an example in which a tension of 50 tons (490 kN) is introduced by using a PC steel strand wire of cp26 mm as a tensional material.

In this conventional example, as illustrated in Fig. 1, three prestressed concrete members are simultaneously manufactured in a longitudinal direction on a pretension bed (manufacturing apparatus 1) by a long line system.

As illustrated in Fig. 1(A), the PC steel strand wire is stretched between reaction force bases, and is tensed by a jack on a left side with a tensile load of 50 tons (490 kN) to add a prestress force.

Subsequently, as illustrated in Fig. 1(B), a lattice reinforcement (reinforcement) and a form are assembled while the PC steel strand wire is tensed, and a concrete is poured and cured.

When predetermined concrete strength is obtained, as illustrated in Fig. 1(C), the tension jack is gradually released, the PC steel strand wire is cut, and the tension is transferred to the prestressed concrete member.

A conventional prestressed concrete is manufactured in this way.

The concrete manufactured in this conventional example is a prestressed concrete for structural materials.

The present invention provides a prestressed concrete that can be used for general buildings.

A mechanical prestress can be introduced by a method similar to that in the conventional example (Fig. 1).

The prestressed concrete according to the present invention is achieved by a novel composition of a concrete, a tensional material, and a tensile load.

Formulation of a concrete is indicated below. (unit kg/m3)
cement: 543
admixture: fly ash: 63
admixture: expansive material: 20
aluminum oxide in expansive material: 0.24 (1.2% by weight)
water: 175
fine aggregate: 783
coarse aggregate: 810
admixture: water reducing agent: 7.50
water-binder ratio: 28%

A mixing ratio of an expansive agent is 20 kg/m3 as described above. The aluminum oxide in the expansive material is 1.2% by weight.

As the tensional material, a strand wire of a carbon fiber reinforced polymer (CFRP) material having a diameter of 12.5 mm was used.

A prestressed concrete having a size of 3 m × 2.4 m × 36 mm was used as one body, and five wires of the tensional materials were disposed at an interval of 500 mm in a lateral direction.

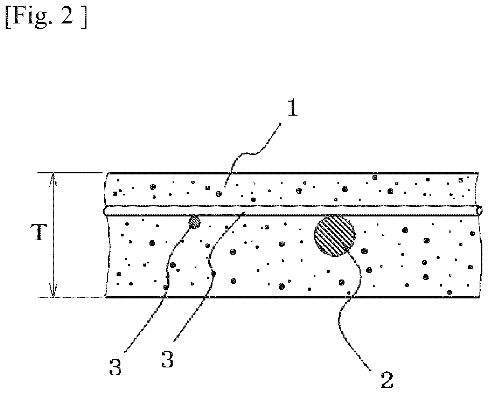

Fig. 2 illustrates an arrangement view of a tensional material.

A thickness T of a prestressed concrete 1 was 36 mm, and a tensional material 2 of ϕ12.5 mm was disposed in a central portion of the plate thickness.

A lattice reinforcement 3 was disposed on an upper surface of the tensional material. A covering thickness was about 7 mm.

In the above concrete composition, the tensional material was disposed, and a tensile load of 18 kN was introduced into each wire of the tensional material.

After curing about for 24 hours, the tension was released.

After a prestressed concrete was manufactured, the compressive strength was 60 MPa or more, satisfying reference strength.

The prestressed concrete of the present invention has a plate thickness of 36 mm. A conventional prestressed concrete using a steel tensional material (ϕ12.5 mm) needs to have a covering thickness of about 30 mm considering a problem such as rust, and therefore needs to have a larger plate thickness than the prestressed concrete of the present invention by a difference (30 mm - 7 mm) in covering thickness, that is, about 23 mm on one side.

The prestressed concrete according to the present invention had a weight of 648 kg.

A conventional prestressed concrete using a steel tensional material has a plate thickness of 82 mm considering a covering thickness. When calculation was performed using an approximate weight of a general reinforced concrete (calculated using 2.5 tons per 1 m3), about 1476 kg was obtained, indicating reduction of 50% or more in weight.

As for the cracking, cracking occurred when one person with a body weight of 70 kg was placed on a central portion of the prestressed concrete plate according to the present invention and jumped about 30 cm to apply a shock with the body weight while fulcrums were put on lower parts of four corners of the prestressed concrete plate and the prestressed concrete plate was placed horizontally. However, when the load was removed, the cracking was completely closed by a crimping effect due to a prestress, and water leakage was not observed at all when a water leakage test was performed.

### [Example 1 of Bending Test]

Test for Comparison Between Mechanical Stress and Chemical Stress Using Bending Test

Six test bodies 10 were subjected to a bending test according to JISA1414 while conditions of a mechanical stress induced by a continuous fiber reinforcing wire (hereinafter, abbreviated as MS) and a chemical stress induced by an expansive material for a concrete (hereinafter, abbreviated as CS) were changed.

A composition of the concrete was similar to the above case in Fig. 2.

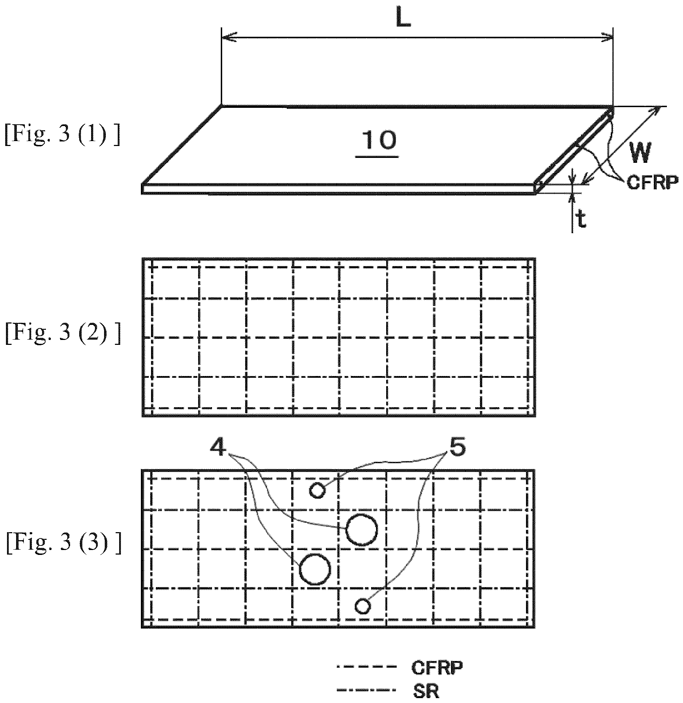

Each of the test bodies 10 had a size of length (L) 2 m × width (W) 1 m × thickness (t) 38 mm. As illustrated in Fig. 3(1), each of the test bodies 10 was a concrete thin plate, and three carbon fiber wires (CFRP) of ϕ7.5 mm were embedded therein. The carbon fiber wires (CFRP) are indicated by a broken line, and spine reinforcement (SR) is indicated by a dashed line. As illustrated in Fig. 3(2), three test bodies had no holes. As illustrated in Fig. 3(3), the other three test bodies had two through holes (large) 4: ϕ150 mm and two through holes (small) 5: ϕ75 mm around the center.

Stress conditions of the six test bodies are as follows.
(CASE-1) with MS + with CS: having no holes
(CASE-2) with MS + without CS: having no holes
(CASE-3) without MS + with CS: having no holes
(CASE-4) with MS + with CS: having holes
(CASE-5) with MS + without CS: having holes
(CASE-6) without MS + with CS: having holes
with MS: with a mechanical stress load induced by a continuous fiber reinforcing wire
without MS: without a mechanical stress load induced by a continuous fiber reinforcing wire
with CS: with an expansive material
without CS: without an expansive material
mechanical stress (MS) condition: continuous fiber reinforcing wire: carbon fiber wire: ϕ7.5 mm

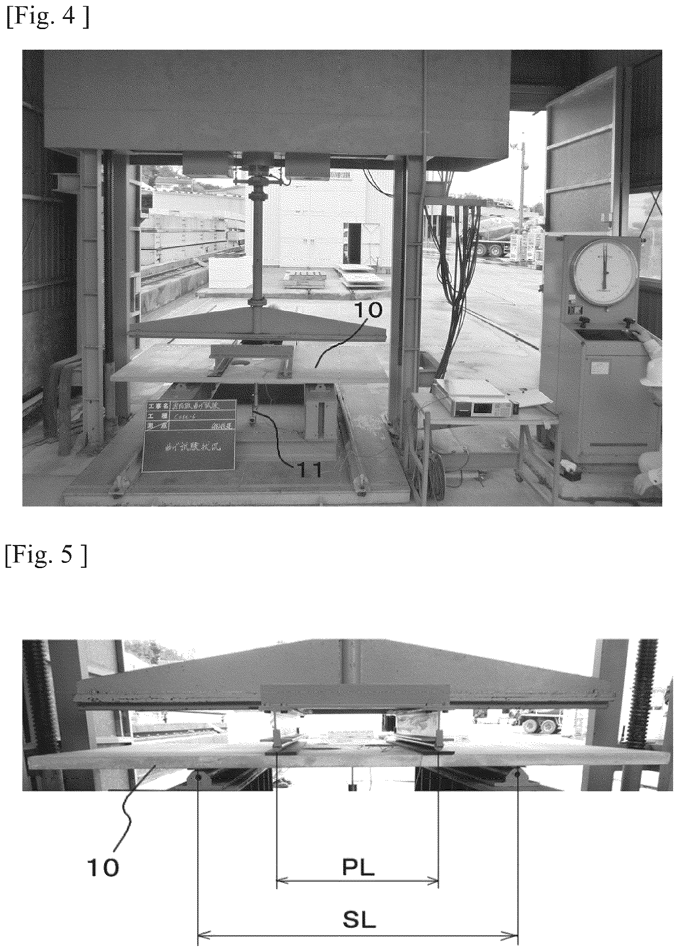

Three continuous fiber reinforcing wires were used in a longitudinal direction (interval of 250 mm) (refer to Fig. 3)
tensile load: 20 kN per continuous fiber reinforcing wire
chemical stress (CS) condition: mixing ratio of an expansive material: 20 kg/m3
bending test condition: performed with a two point-concentrated load by using a bending test apparatus illustrated in Fig. 4.

Deflection was measured using a displacement meter 11.
span (distance between fulcrums: SL): 1,000 mm (refer to Fig. 5)
distance between internal load points (points to which a force is applied) (PL): 500 mm (refer to Fig. 5)

### [Test Result]

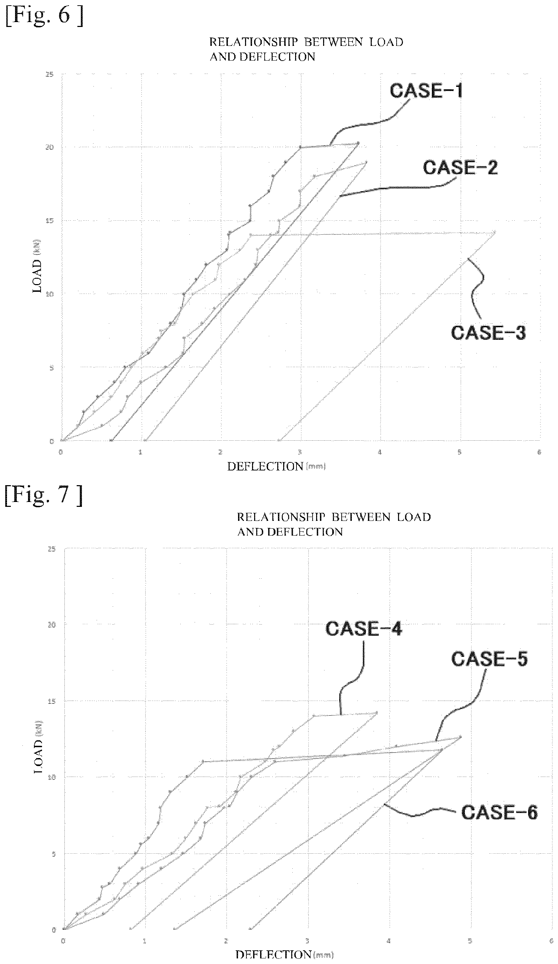

Figs. 6 and 7 are diagrams illustrating a relationship between a load and deflection.

Fig. 6 illustrates results of CASE-1 to CASE-3.

Fig. 6 illustrates a comparison result among three types each having no holes,
CASE-1: with MS + with CS,
CASE-2: with MS + without CS, and
CASE-3: without MS + without CS.

Fig. 7 illustrates results of CASE-4 to CASE-6.

Fig. 7 illustrates a comparison result among three types each having holes,
CASE-4: with MS + with CS,
CASE-5: with MS + without CS, and
CASE-6: without MS + without CS.

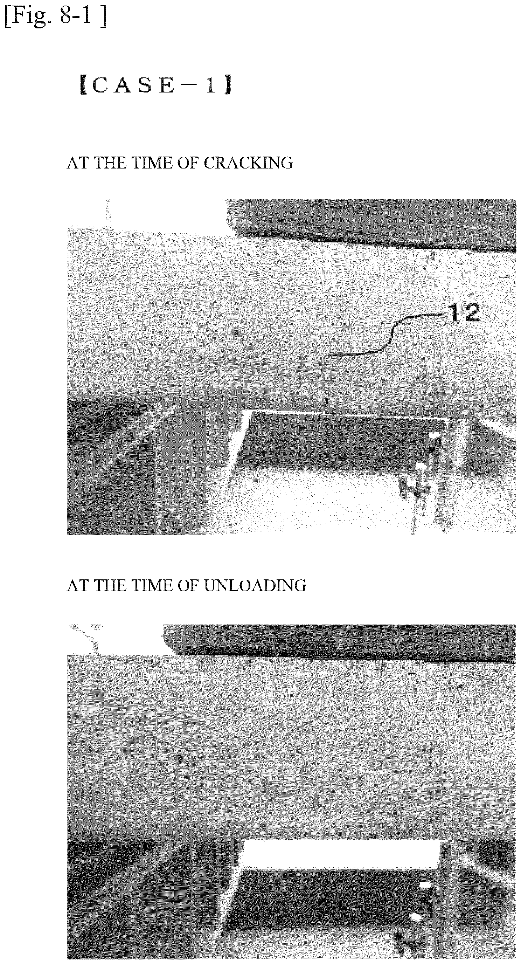

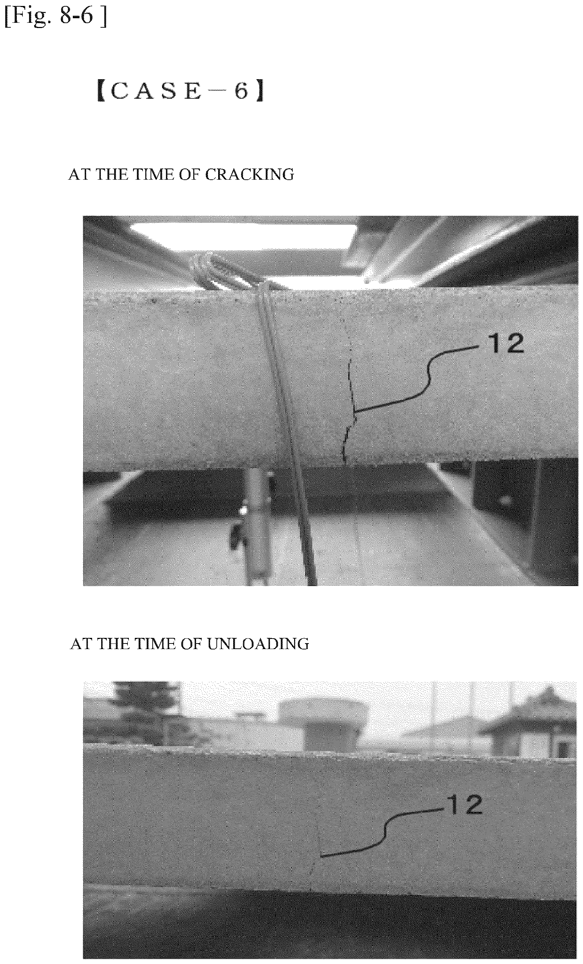

Figs. 8-1 to 8-6 are photographs comparing situations at the time of cracking and at the time of unloading in bending tests of CASE-1 to CASE-6.

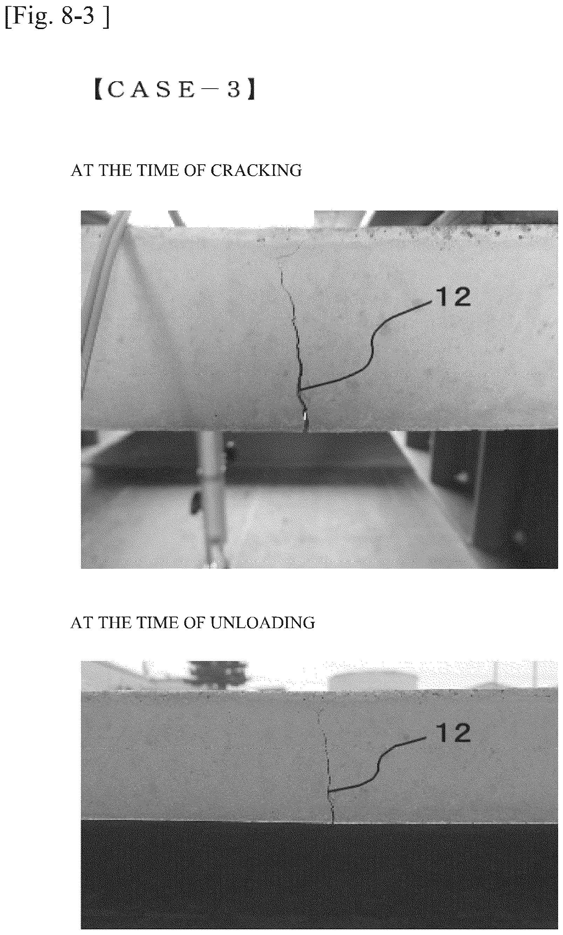

In CASE3 (Fig. 8-3) and CASE6 (Fig. 8-6), into which only a chemical stress had been introduced, cracks remained even at the time of unloading after fracture.

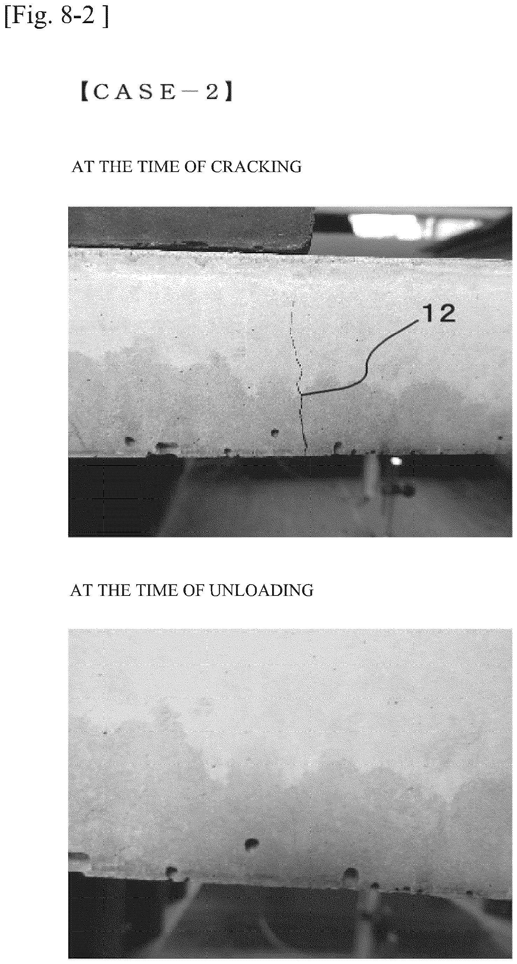

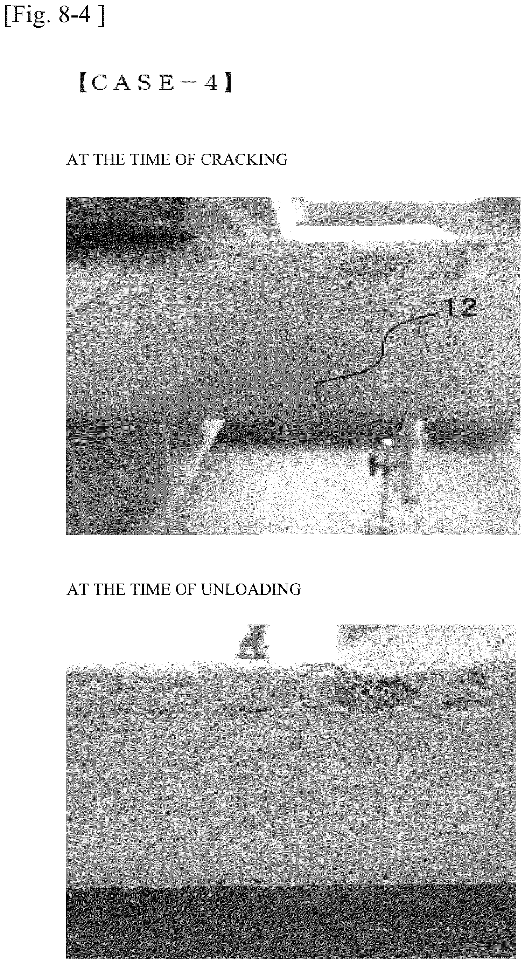

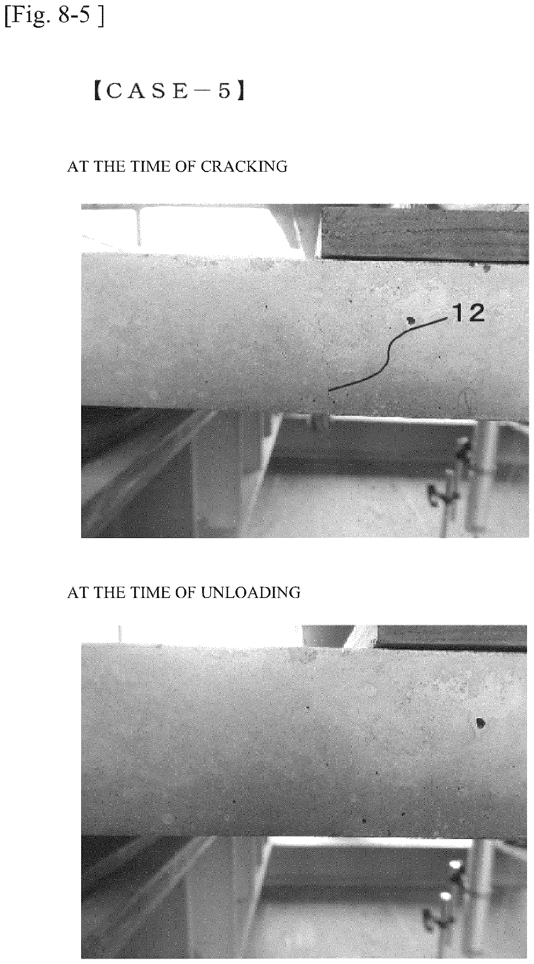

On the other hand, in CASE1 (Fig. 8-1), CASE2 (Fig. 8-2), CASE4 (Fig. 8-4), and CASE5 (Fig. 8-5), into which a mechanical stress had been introduced, cracks returned so as to be in the original state and were not observed at the time of unloading after fracture.

The results of the bending test indicate the following.

fracture load residual deflection cracking situation after fracture (unloading)

| | | | |
|---|---|---|---|
| CASE-1 | 20.3 | 0.63 | 0.05 mm or less |
| CASE-2 | 19.0 | 1.05 | 0.07 mm |
| CASE-3 | 14.2 | 2.73 | 0.40 mm or more |
| CASE-4 | 14.2 | 0.82 | 0.05 mm or less |
| CASE-5 | 12.6 | 1.36 | 0.05 mm or less |
| CASE-6 | 11.8 | 2.30 | 0.40 mm or more |

Three days after the bending test, a water leakage test of a cracked part was performed. A problem of water leakage was not observed in any cracked part.

This indicates that even when cracking occurs by an external force when a tensional material having carbon fiber material is embedded, cracks are removed by a restoring action at the time of unloading and a risk of water leakage disappears. Particularly when a mechanical stress was introduced into the tensional material, residual deflection was hardly observed, and a concrete was restored to such an extent that no crack was observed.

The above test results indicate that the cases into which both a mechanical stress and a chemical stress have been introduced (CASE-1, CASE-4) have the highest fracture load and have the highest strength. In these cases, at the time of unloading after fracture, a crack was crimped by the mechanical stress and was hardly observed, and there was no problem in a water leakage test at all.

In the cases only with a mechanical stress (CASE-2, CASE-4), a fracture load was higher than the case only with a chemical stress and was lower than the case with a composite stress of the mechanical stress and the chemical stress. At the time of unloading after fracture, a crack was crimped by the mechanical stress and was hardly observed, and there was no problem in a water leakage test at all.

The cases only with a chemical stress (CASE-3, CASE-6) indicate a low fracture load and the lowest strength. In these cases, a crack remained as it was, although the crack had a slightly smaller size after fracture, but water leakage was not confirmed in a water leakage test.

By the above results, it has been found that the case in which a composite stress of a mechanical stress and a chemical stress has been introduced has higher strength than the case in which a mechanical stress or a chemical stress is introduced singly.

It is considered that this is because a compression action by a mechanical stress and an expansion action by a chemical stress act synergistically to a concrete to increase the strength.

Results of the test bodies each having no holes (CASE-1 to CASE-3) and test bodies each having holes (CASE-4 to CASE-6) indicate that in test bodies each having no holes (Fig. 6), CASE-1 (MS + CS) and CASE-2 (MS) have a high fracture load to approximately the same extent and CASE-3 (CS) has a slightly lower fracture load, by comparison between two graphs (Figs. 6 and 7).

On the other hand, in the test bodies each having holes (Fig. 7), CASE-4 (MS + CS) has a higher fracture load, and CASE-5 (MS) and CASE-6 (CS) have a low fracture load to approximately the same extent.

This is a particularly remarkable result. The case of no holes in Fig. 6 exhibits a large effect of a mechanical stress. CASE-1 (MS + CS) and CASE-2 (MS) in which a mechanical stress has been introduced have high strength. CASE-3 (CS) in which a mechanical stress has not been introduced has low strength. However, in a case where there is partially a large change in shape such as a notched shape or a cutout shape, for example, holes illustrated in Fig. 7, it is indicated that not only the mechanical stress but also the chemical stress has a large effect on the strength.

Conventionally, a high mechanical stress of 300 kN or more has been introduced into a prestressed concrete as a primary structural member requiring high strength. Unlike the present invention, a case of introducing a low mechanical stress has not been studied at all, and such a test has not been performed at all. In addition, combined use of a chemical stress for increasing strength has not been considered at all. It has been judged that there is no effect by the combined use.

As a conventional common sense, it has been considered that in a case where a mechanical stress is introduced, an effect of the stress is hardly shown even by combined use of a chemical stress (main purpose of chemical stress is to prevent a crack on a surface). However, by this test, it has been confirmed that in a low mechanical stress state of 300 kN or less with a plate thickness of 80 mm or less, the prestressed concrete is effective for increasing the strength by combined use of appropriate chemical stress conditions.

In particular, it has been confirmed that combination of a mechanical stress and a chemical stress is extremely effective when a prestressed concrete is used as a building member, partially having a notched shape, a cutout shape, or a hole, or having a high design property characterized by an irregular shape on a surface.

### [Example 2 of Bending Test]

Under the Conditions of Different Aluminum Oxide Content in the Expansive Material,
Test for Comparison Between Mechanical Stress and Chemical Stress Using Bending Test

A test body having a size similar to that of the above [Example 1 of bending test] was manufactured.

As the expansive material, an expansive material for the present invention and a commercially available expansive material were used as follows.

A bending test was performed in a similar manner as in the [Example 1 of bending test].

### Expansive material 1

Expansive material: an expansive material for the present invention(PL)
Aluminum oxide content: 1.2% by weight

### Expansive material 2

Expansive material: a commercially available expansive material: Buddy Rhodes Company(BL)
Aluminum oxide content: 15 to 25% by weight

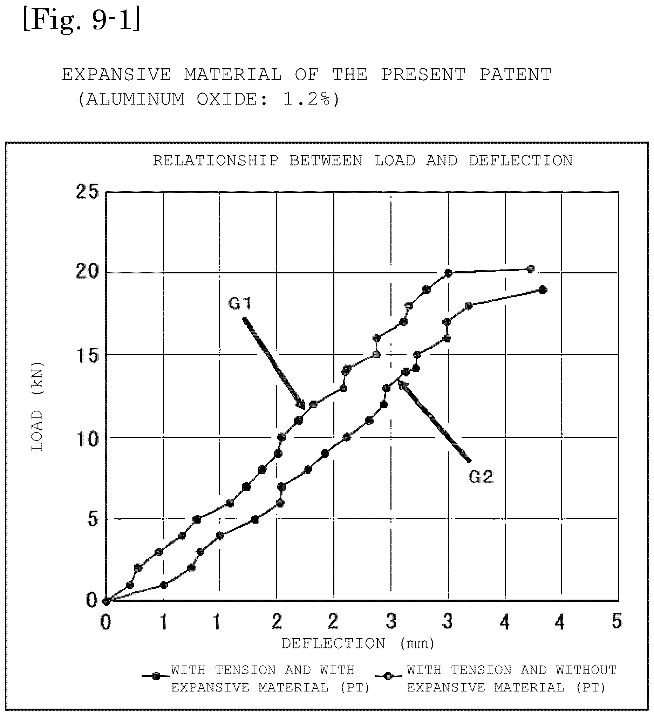

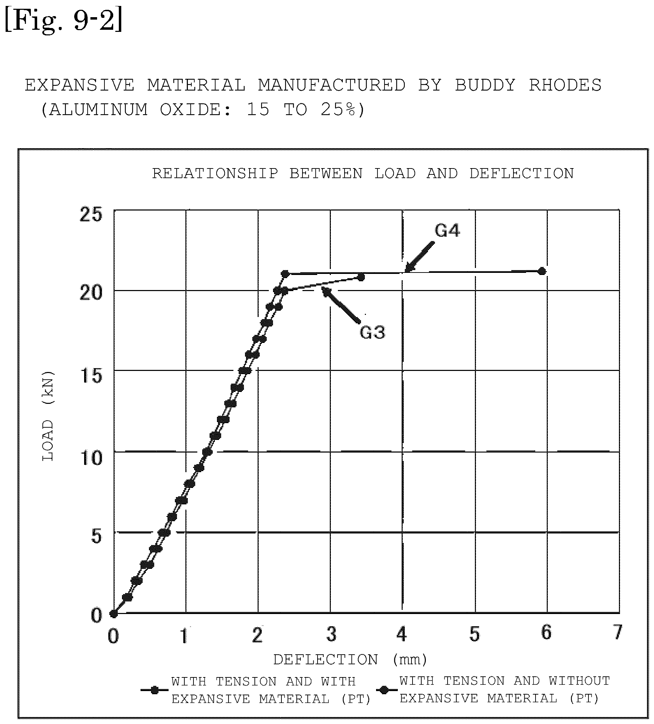

The bending test results by the difference between the expansive materials (diagrams illustrating a relationship between a load and deflection) are illustrated in Figs. 9-1 and 9-2.

In the graph of the expansive material for the present invention (aluminum oxide: 1.2% by weight) in Fig. 9-1, G1 (with tension and with an expansive material) has apparently higher flexural strength than G2 (with tension and without an expansive material). It can be understood that a synergistic effect is shown by using an expansive material for the present invention (aluminum oxide: 1.2% by weight).

Commercially available expansive material in Fig. 9-2: in the graph of the expansive material manufactured by Buddy Rhodes (aluminum oxide: 15 to 25% by weight), G3 (with tension and with an expansive material) and G4 (with tension and without an expansive material) have approximately the same values. Commercially available expansive material: in a case of using an expansive material manufactured by Buddy Rhodes (aluminum oxide: 15 to 25% by weight), a synergistic effect has not been observed.

From the above, it can be understood that in a case where the aluminum oxide content in a concrete expansive material is 1.2% by weight, a synergistic effect of a mechanical stress and a chemical stress is shown, and in a case where the aluminum oxide content in a concrete expansive material is 15 to 25% by weight, a synergistic effect of a mechanical stress and a chemical stress is not shown.

As described above, the prestressed concrete of the present invention has high flexural strength, and a significant effect of reduction in thickness, reduction in weight, and suppression of cracking. Therefore, the prestressed concrete can be applied to an outer wall, a partition wall, a floorboard, a furniture material, or the like as a general building member, and becomes an excellent concrete plate having a completely new design property due to the lightweight thin plate and having a potential of a design property.

### Reference Signs List

- 1: prestressed concrete
- 2: tensional material
- 3: lattice reinforcement
- 4: hole (large)
- 5: hole (small)
- 10: test body
- 11: displacement meter
- 12: crack
- T: plate thickness of concrete
- L: length of test body
- W: width of test body
- t: thickness of test body
- CFRP: carbon fiber wire
- SR: spine reinforcement
- SL: span (distance between fulcrums)
- PL: distance between internal load points (points to which a force is applied)

## Claims

1. A prestressed concrete, being a concrete into which a prestress is introduced, wherein
a mechanical stress induced by a tensional material and a chemical stress induced by an expansive material for a concrete are introduced simultaneously into the concrete,
the tensional material is a continuous fiber reinforcing wire,
the expansive material for a concrete is contained in an amount of 5 to 30 kg /m3 to the concrete material, and
aluminum oxide is contained in an amount of 0.2 to 2.0% by weight to the expansive material for a concrete.

2. The prestressed concrete according to claim 1, wherein
the continuous fiber reinforcing wire is a reinforcing fiber wire of one or more kinds of fibers selected from an aramid fiber, a carbon fiber, a glass fiber, a poly-p-phenylenebenzobisoxazole fiber, a stone material fiber such as a basalt fiber, and a rust prevention-treated PC steel strand wire.

3. The prestressed concrete according to claim 1 or 2, wherein
the expansive material for a concrete is a mixture of one or more kinds selected from a lime-based expansive material such as quick lime, an ettringite-based expansive material such as calcium sulfoaluminate, an ettringite-lime composite-based expansive material, an iron powder-based expansive material, a magnesium-based expansive material, an aluminum powder-based expansive material, a shale-based expansive material, and a silica-based expansive material.

4. The prestressed concrete according to any one of claims 1 to 3, wherein
a wire of the tensional material has a wire diameter of 18 mm or less.

5. The prestressed concrete according to any one of claims 1 to 4, wherein
the tensional material has a tensile load of 300 kN or less per the wire.

6. The prestressed concrete according to any one of claims 1 to 5, wherein
the concrete has a thickness of 80 mm or less.

7. The prestressed concrete according to any one of claims 1 to 6, wherein
a discontinuous fiber reinforcing material is used.

8. The prestressed concrete according to claim 7, wherein
the discontinuous fiber reinforcing material is a reinforcing fiber material formed of one or more kinds of fibers selected from a carbon fiber, a glass fiber, a resin fiber, and a stone material fiber such as a basalt fiber.

9. The prestressed concrete according to any one of claims 1 to 8, wherein
a pigment is mixed.

10. The prestressed concrete according to any one of claims 1 to 9, wherein
any irregularities are formed on a surface of the prestressed concrete using a soft form.
